# EUROPEAN PATENT SPECIFICATION

(11) **EP 3 029 107 B1**
(45) Date of publication and mention of the grant of the patent: **13.03.2019**
(21) Application number: 14833021.0
(22) Date of filing: 28.07.2014
(51) Int. Cl.: C08L 67/03, C08K 3/22, C08K 3/36, C08K 7/06, C08L 27/12, C10M 147/00, C10M 107/32, C10M 169/04, C10M 125/02

(54) **LIQUID CRYSTAL POLYESTER COMPOSITION**
FLÜSSIGKRISTALLPOLYESTERZUSAMMENSETZUNG
COMPOSITION DE POLYESTER À CRISTAUX LIQUIDES

(30) Priority: 31.07.2013 JP 2013158732
(43) Date of publication of application: 08.06.2016
(73) Proprietor: Sumitomo Chemical Company, Limited, Tokyo 104-8260 (JP)
(72) Inventor: KOMATSU, Shintaro, Tsukuba-shi Ibaraki 300-3294 (JP); MAEDA, Mitsuo, Tsukuba-shi Ibaraki 300-3294 (JP)
(74) Representative: Vossius & Partner Patentanwälte Rechtsanwälte mbB
(86) International application number: PCT/JP2014/070411
(87) International publication number: WO 2015/016370

(56) References cited:
- EP-A1- 2 330 156
- WO-A1-2012/096387
- WO-A2-2004/058916
- JP-A- H1 025 402
- JP-A- H07 252 410
- JP-A- H07 252 410
- JP-A- 2001 026 699
- JP-A- 2003 171 538
- JP-A- 2008 038 062
- JP-A- 2011 068 873
- JP-A- 2011 202 062
- JP-A- 2012 116 907
- JP-A- 2013 032 485
- US-A- 5 498 654
- FRIEDRICH K: 'Wear performance of high temperature polymers and their composites' APPLICATION OF HIGH TEMPERATURE POLYMERS 1997, pages 221 - 246, XP008182426

## Description

### TECHNICAL FIELD

The present invention relates to a liquid crystal polyester composition containing a liquid crystal polyester and a fluorine resin.

### BACKGROUND ART

As the material of a sliding member suitable for use at high temperatures, a liquid crystal polyester composition containing a liquid crystal polyester and a fluorine resin has been studied (see JP-A-63-230756 and JP-A-05-105804). The liquid crystal polyester composition further containing a filler such as a glass fiber and a carbon fiber in the liquid crystal porieteru has also been studied (see JP-A-2010-003661).

JPH07252410 A discloses sealing compositions for scroll type compressor comprising liquid crystal polyester having a melt flow temperature of at least 320°C, fluororesin, carbon fibres and talc.

### DISCLOSURE OF THE INVENTION

An object of the present invention is to provide a liquid crystal polyester composition that is excellent in slipperiness. The present invention relates to the following inventions.
[1] A liquid crystal polyester composition containing a liquid crystal polyester, a fluorine resin, a carbon fiber, and a granular filler, wherein the granular filler is at least one granular filler selected from the group consisting of aluminum oxide, silicon oxide and titanium oxide.
[2] The liquid crystal polyester composition according to the item [1], wherein the liquid crystal polyester is a liquid crystal polyester having a repeating unit represented by formula (1), a repeating unit represented by formula (2), and a repeating unit represented by formula (3).

   (1) -O-Ar¹-CO-

   (2) -CO-Ar²-CO-

   (3) -X-Ar³-Y-

   wherein Ar¹ represents a phenylene group, a naphthylene group, or a biphenylylene group; Ar² and Ar³ each independently represent a phenylene group, a naphthylene group, a biphenylylene group, or a group represented by formula (4); X and Y each independently represent an oxygen atom or an imino group; and each hydrogen atom present in the group represented by Ar¹, Ar² or Ar³ may be independently substituted with a halogen atom, an alkyl group or an aryl group;

   (4) -Ar⁴-Z-Ar⁵-

   wherein Ar⁴ and Ar⁵ each independently represent a phenylene group or a naphthylene group; and Z represents an oxygen atom, a sulfur atom, a carbonyl group, a sulfonyl group or an alkylidene group.
[3] The liquid crystal polyester composition according to the item [2], wherein the liquid crystal polyester is a liquid crystal polyester having 30 to 80 mol% of the repeating unit represented by formula (1), 10 to 35 mol% of the repeating unit represented by formula (2), and 10 to 35 mol% of the repeating unit represented by formula (3), relative to the total amount of all repeating units of the liquid crystal polyester.
[4] The liquid crystal polyester composition according to any one of the items [1] to [3], wherein the volume average particle diameter of the granular filler is 1 µm or less.
[5] The liquid crystal polyester composition according to any one of the items [1] to [4], wherein the content of the fluorine resin is 5 to 20 parts by mass, relative to 100 parts by mass of the liquid crystal polyester.
[6] The liquid crystal polyester composition according to any one of the items [1] to [5], wherein the content of the carbon fiber is 15 to 30 parts by mass, relative to 100 parts by mass of the liquid crystal polyester.
[7] The liquid crystal polyester composition according to any one of the items [1] to [6], wherein the content of the granular filler is 5 to 20 parts by mass, relative to 100 parts by mass of the liquid crystal polyester.
[8] The liquid crystal polyester composition according to any one of the items [1] to [7], further containing a plate-like filler.
[9] The liquid crystal polyester composition according to the item [8], wherein the plate-like filler is at least one of plate-like fillers selected from the group consisting of mica and graphite.
[10] The liquid crystal polyester composition according to the item [8] or [9], wherein the content of the plate-like filler is 5 to 10 parts by mass, relative to 100 parts by mass of the liquid crystal polyester.
[11] A sliding member obtained by molding the liquid crystal polyester composition as defined in any one of the items [1] to [10].

### MODE FOR CARRYING OUT THE INVENTION

The liquid crystal polyester is a polyester which exhibits liquid crystallinity in a molten state, preferably melts at a temperature of 450°C or lower. The liquid crystal polyester may be a liquid crystal polyester amide, a liquid crystal polyester ether, a liquid crystal polyester carbonate, or a liquid crystal polyester imide. Preferably, the liquid crystal polyester is a wholly aromatic liquid crystal polyester, consisting only of an aromatic compound as a raw material monomer.

Typical examples of the liquid crystal polyester include: a polymer obtained by polymerizing (polycondensing) an aromatic hydroxy carboxylic acid, an aromatic dicarboxylic acid, and at least one compound selected from the group consisting of an aromatic diol, an aromatic hydroxylamine and an aromatic diamine; a polymer obtained by polymerizing plural kinds of aromatic hydroxy carboxylic acid; a polymer obtained by polymerizing an aromatic dicarboxylic acid and at least one compound selected from the group consisting of an aromatic diol, an aromatic hydroxylamine and an aromatic diamine; and a polymer obtained by polymerizing a polyester, such as polyethylene terephthalate, and an aromatic hydroxy carboxylic acid. Polymerizable derivatives of the aromatic hydroxy carboxylic acid, aromatic dicarboxylic acid, aromatic diol, aromatic hydroxylamine, and aromatic diamine may also be used for the polymerization described above.

Examples of the polymerizable derivatives of carboxyl group-containing compounds, such as an aromatic hydroxy carboxylic acid and an aromatic dicarboxylic acid, include an ester obtained by converting a carboxyl group into an alkoxycarbonyl group or an aryloxycarbonyl group, an acid halide obtained by converting a carboxyl group into a haloformyl group, and an acid anhydride obtained by converting a carboxyl group into an acyloxycarbonyl group. Examples of the polymerizable derivatives of hydroxyl group-containing compounds, such as an aromatic hydroxy carboxylic acid, an aromatic diol, and an aromatic hydroxylamine, include an acylated derivative obtained by acylating a hydroxyl group to convert it into an acyloxyl group. Examples of the polymerizable derivatives of amino group-containing compounds, such as an aromatic hydroxylamine and an aromatic diamine, include an acylated derivative obtained by acylating an amino group to convert it into an acylamino group.

The liquid crystal polyester preferably has a repeating unit represented by the following formula (1) (hereinafter also referred to as "repeating unit (1)"), and more preferably has the repeating unit (1), a repeating unit represented by the following formula (2) (hereinafter also referred to as "repeating unit (2)"), and a repeating unit represented by the following formula (3) (hereinafter also referred to as "repeating unit (3)").

(1) -O-Ar¹-CO-

(2) -CO-Ar²-CO-

(3) -X-Ar³-Y-

wherein Ar¹ represents a phenylene group, a naphthylene group, or a biphenylylene group; Ar² and Ar³ each independently represent a phenylene group, a naphthylene group, a biphenylylene group, or a group represented by the following formula (4); X and Y each independently represent an oxygen atom or an imino group (-NH-) ; and each hydrogen atom present in the group represented by Ar¹, Ar² or Ar³ may be independently substituted with a halogen atom, an alkyl group or an aryl group.

(4) -Ar⁴-Z-Ar⁵-

wherein Ar⁴ and Ar⁵ each independently represent a phenylene group or a naphthylene group; and Z represents an oxygen atom, a sulfur atom, a carbonyl group, a sulfonyl group or an alkylidene group.

Examples of the halogen atom include a fluorine atom, a chlorine atom, a bromine atom and an iodine atom. Examples of the alkyl group include a methyl group, an ethyl group, a n-propyl group, an isopropyl group, a n-butyl group, an isobutyl group, a s-butyl group, a t-butyl group, a n-hexyl group, a 2-ethylhexyl group, a n-octyl group and a n-decyl group, each of which usually has 1 to 10 carbon atoms. Examples of the aryl group include a phenyl group, an o-tolyl group, a m-tolyl group, a p-tolyl group, a 1-naphthyl group and a 2-naphthyl group, and the carbon number thereof is usually 6 to 20.

In the case where the hydrogen atom is substituted in each of the groups represented by Ar¹, Ar² or Ar³, the number of the substituted group is usually 2 or less, and preferably 1 or less.

Examples of the alkylidene group include a methylene group, an ethylidene group, an isopropylidene group, a n-butylidene group and a 2-ethylhexylidene group, and the carbon number thereof is usually 1 to 10.

The repeating unit (1) is a repeating unit derived from a given aromatic hydroxy carboxylic acid. The repeating unit (1) is preferably a repeating unit in which Ar¹ is a p-phenylene group (a repeating unit derived from p-hydroxybenzoic acid), or a repeating unit in which Ar¹ is a 2, 6-naphthylene group (a repeating unit derived from 6-hydroxy-2-naphthoic acid).

The repeating unit (2) is a repeating unit derived from a given aromatic dicarboxylic acid. The repeating unit (2) is preferably a repeating unit in which Ar² is a p-phenylene group (a repeating unit derived from terephthalic acid); Ar² is a m-phenylene group (a repeating unit derived from isophthalic acid); or Ar² is a 2,6-naphthylene group (a repeating unit derived from 2,6-naphthalenedicarboxylic acid).

The repeating unit (3) is a repeating unit derived from a given aromatic diol, aromatic hydroxylamine or aromatic diamine. The repeating unit (3) is preferably a repeating unit in which Ar³ is a p-phenylene group (a repeating unit derived from hydroquinone, p-aminophenol or p-phenylenediamine), or Ar³ is a 4, 4' -biphenylylene group (a repeating unit derived from 4,4'-dihydroxybiphenyl, 4-amino-4'-hydroxybiphenyl or 4,4'-diaminobiphenyl) .

The amount of the repeating unit (1) contained is usually 30 mol% or more, preferably 30 to 80 mol%, more preferably 40 to 70 mol%, and further preferably 45 to 65 mol%, relative to the total amount of all repeating units. The amount of the repeating unit (2) contained is usually 35 mol% or less, preferably 10 to 35 mol%, more preferably 15 to 30 mol%, and further preferably 17.5 to 27.5 mol%, relative to the total amount of all repeating units. The amount of the repeating unit (3) contained is usually 35 mol% or less, preferably 10 to 35 mol%, more preferably 15 to 30 mol%, and further preferably 17.5 to 27.5 mol%, relative to the total amount of all repeating units.

The "total amount of all repeating units" herein refers to a value obtained by dividing mass of each of the repeating units constituting the liquid crystal polyester by formula weight of each of the repeating units to calculate each amount of substance (moles) of the respective repeating units, and then summing each amount of substance obtained.

The larger the amount of the repeating unit (1) is, the stronger the tendency to have improved melt flowability, heat resistance, and strength/rigidity. When the amount is within the normal range described above, the melt temperature and melt viscosity can be adjusted to an appropriate range, thus the molding temperature can be set not too high.

The amount ratio of the repeating unit (2) to the repeating unit (3), represented by {amount of repeating unit (2)}/{amount of repeating unit (3)} (mol/mol), is usually 0.9/1 to 1/0.9, preferably 0.95/1 to 1/0.95, and more preferably 0.98/1 to 1/0.98.

The repeating units (1) to (3) in the liquid crystal polyester may each independently have two or more kinds or more. The liquid crystal polyester may have a repeating unit other than the repeating units (1) to (3), provided that the amount thereof is usually 10 mol% or less, and preferably 5 mol% or less, relative to the total amount of all repeating units.

The liquid crystal polyester preferably has a repeating unit such that X and Y are each an oxygen atom, that is, a repeating unit derived from a given aromatic diol, as the repeating unit (3), because it facilitates reduction in melt viscosity, and more preferably has exclusively a repeating unit such that X and Y are each an oxygen atom, as the repeating unit (3) .

It is preferred that the liquid crystal polyester is produced by melt-polymerizing raw material monomers corresponding to the respective repeating units constituting the liquid crystal polyester to obtain a polymer (hereinafter may be referred to as "prepolymer"), followed by subjecting the obtained prepolymer to solid phase polymerization. This makes it possible to produce the liquid crystal polyester with high molecular weight having enhanced heat resistance and strength/rigidity in a manner of good handleability. The melt polymerization may be carried out in the presence of a catalyst, and examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as 4-(dimethylamino)pyridine and 1-methylimidazole. Among them, nitrogen-containing heterocyclic compounds are preferred.

The liquid crystal polyester usually has an incipient fluidization temperature of 270°C or more, preferably 270 to 400°C, and more preferably 280 to 380°C. The higher the incipient fluidization temperature is, the stronger the tendency of the polyester to have improved heat resistance and strength/rigidity. When the incipient fluidization temperature is within normal range described above, the melt temperature and melt viscosity can be adjusted to an appropriate range, thus the molding temperature can be set not too high.

The incipient fluidization temperature, also called flow temperature or fluidizing temperature, is a temperature at which the viscosity reaches 4800 Pa·s (48000 poises) as measured by melting the liquid crystal polyester while heating it at a rate of 4°C/min, and extruding the melt under a load of 9.8 MPa (100 kg/cm²) through a nozzle with an inner diameter of 1 mm and a length of 10 mm, using a capillary rheometer. The incipient fluidization temperature gives an indication of a molecular weight of a liquid crystal polyester (see "Liquid Crystal Polymers - Synthesis, Molding, and Applications -", edited by Naoyuki Koide, CMC Publishing Co., Ltd., Jun. 5, 1987, p. 95).

Examples of the fluorine resin include polytetrafluoroethylene (PTFE), a tetrafluoroethylene-hexafluoropropylene copolymer, polytrichlorofluoroethylene, and a tetrafluoroethylene-perfluoroalkylvinylether copolymer. The composition of the present invention may contain two or more kinds of fluorine resins.

The content of the fluorine resin in the liquid crystal polyester composition is usually 5 to 30 parts by mass, and preferably 5 to 20 parts by mass, relative to 100 parts by mass of the liquid crystal polyester. The higher the content of the fluorine resin, the stronger the tendency to have improved slipperiness of the liquid crystal polyester composition. When the content is within the normal range described above, the melt flowability and strength/rigidity of the liquid crystal polyester composition can be adjusted to an appropriate range.

The carbon fiber may be a PAN-based carbon fiber using polyacrylonitrile as a raw material, a pitch-based carbon fiber using coal tar or petroleum pitch as a raw material, a cellulosic carbon fiber using viscose rayon, a cellulose acetate or the like as a raw material, or a vapor growing carbon fiber using hydrocarbon or the like as a raw material, and two or more kinds of them may be used. Also, the carbon fiber may be a chopped carbon fiber or a milled carbon fiber, and two or more kinds of them may be used.

The number average fiber diameter of the carbon fiber is usually 5 to 20 µm, and preferably 5 to 15 µm, and the number average aspect ratio (number average fiber length/number average fiber diameter) of the carbon fiber is usually 10 to 200, and preferably 20 to 100. The number average fiber diameter and number average fiber length of the carbon fiber can be measured by electron microscope observation.

The carbon fiber usually breaks when mixing with the liquid crystal polyester by melt kneading or the like. Therefore, for example, using a long carbon fiber having a number average aspect ratio of 500 or more as a raw material, this carbon fiber may be allowed to break when mixing it, so that the aspect ratio thereof is within the above range.

The content of the carbon fiber in the liquid crystal polyester composition is usually 10 to 40 parts by mass, and preferably 15 to 30 parts by mass, relative to 100 parts by mass of the liquid crystal polyester. The higher the content of the carbon fiber, the stronger the tendency to have improved wear resistance and strength/rigidity of the liquid crystal polyester composition. When the content is within the normal range described above, wear of the mating material slid to each other can be suppressed.

The granular filler is a filler having a shape other than fibrous and plate-like shape, and is a filler having a spherical or other shape. As the granular filler, examples include aluminum oxide, silicon oxide and titanium oxide, and two kinds or more of them may be used.

The volume average particle diameter of the granular filler is usually 20 µm or less, preferably 5 µm or less, and more preferably 1 µm or less, from the viewpoint of slipperiness of the liquid crystal polyester composition, wear resistance of the liquid crystal polyester composition, and difficulty of wearing of the mating material slid to each other. The volume average particle diameter of the granular filler is usually 0.1 µm or more.

The volume average particle diameter of the granular filler can be measured by a laser diffraction method. For example, the appropriate amount of the granular filler is put into a solvent (aqueous sodium hexametaphosphate solution, etc.), and the granular filler is dispersed in the solvent for 10 minutes with an ultrasonic cleaning machine or the like, then irradiated with a laser beam, and the volume average particle diameter of the granular filler can be obtained from transmission diffraction. These operations can be performed by using Microtrac particle size analyzer such as MT-3000 II (NIKKISO CO., LTD.).

The number average aspect ratio of the granular filler (number average maximum diameter/number average minimum diameter) is usually 1 to 2, and preferably 1 to 1.5, and it is preferred that the number average aspect ratio is approximately 1, namely, the granular filler is nearly spherical.

The content of the granular filler in the liquid crystal polyester composition is usually 5 to 30 parts by mass, preferably 5 to 20 parts by mass, and more preferably 5 to 15 parts by mass, relative to 100 parts by mass of the liquid crystal polyester. The higher the content of the granular filler, the stronger the tendency to have improved slipperiness of the liquid crystal polyester composition.

When the content is within the normal range described above, a composition with good wear resistance can be obtained.

It is preferred that the liquid crystal polyester composition further contains a plate-like filler, from the viewpoint of slipperiness.

As the plate-like filler, a plate-like inorganic filler is preferred, and preferable examples thereof include mica and graphite, and two or more kinds of them may be used.

The volume average particle diameter of the plate-like filler is usually 1 to 80 µm or less, and preferably 3 to 50 µm or less. The volume average particle diameter of the plate-like filler can be measured by a laser diffraction method. For example, the appropriate amount of the plate-like filler is put into a solvent such as ethanol, and the plate-like filler is dispersed in the solvent for 10 minutes with an ultrasonic cleaning machine or the like, then irradiated with a laser beam. The area of the projected image of the plate-like filler from the visual field direction is obtained, and the diameter of the circle assuming the same circle having the same area (area circle equivalent diameter) is read as the particle diameter of the plate-like filler, and the arithmetic average value is calculated, whereby the volume average particle diameter of the plate-like filler can be obtained. These operations can be performed by using Microtrac particle size analyzer such as MT-3000 II (NIKKISO CO., LTD.).

The number average aspect ratio of the plate-like filler (number average plate surface diameter (area circle equivalent diameter) /number average plate thickness) is usually 5 to 200, and preferably 10 to 100.

The number average plate surface diameter and number average plate thickness of the plate-like filler can be measured by electron microscope observation.

The content of the plate-like filler in the liquid crystal polyester composition is usually 5 to 20 parts by mass, and preferably 5 to 10 parts by mass, relative to 100 parts by mass of the liquid crystal polyester.

When the content of the plate-like filler is within the normal range described above, wear resistance of the liquid crystal polyester composition can be improved.

The liquid crystal polyester composition may contain other component as necessary, for example, a resin other than a liquid crystal polyester and a fluorine resin, a fibrous filler other than a carbon fiber, additives such as an antioxidant, a thermal stabilizer, an ultraviolet absorber, an antistatic agent, a surfactant, a flame retardant and coloring agent. The content of the other component, or the total content when a plurality of other components is contained, is usually 10 parts by mass or less, relative to 100 parts by mass of the liquid crystal polyester.

The liquid crystal polyester composition is preferably prepared by melt-kneading a liquid crystal polyester, a fluorine resin, a carbon fiber, a granular filler, and a plate-like filler and other components used as necessary, using an extruder, extruding it in a strand shape, and pelletizing it.

The extruder used is preferably an extruder including a cylinder, one or more screws provided in the cylinder and one or more feed ports provided on the cylinder, more preferably such an extruder further including one or more vent parts provided in the cylinder.

The liquid crystal polyester composition of the present invention is excellent in slipperiness, thus preferably used in the material of a sliding member. Examples of the sliding member include bearing, slider, gear, cam and seal ring. Molding of the liquid crystal polyester composition into a sliding member is preferably performed by melt molding, and more preferably performed by injection molding.

### EXAMPLES

### [Production of Liquid Crystal Polyester]

Into a reactor equipped with a stirrer, a torque meter, a nitrogen gas inlet, a thermometer and a reflux condenser, 1034.99 g (5.5 mol) of 6-hydroxy-2-naphthoic acid, 378.33 g (1.75 mol) of 2,6-naphthalene dicarboxylic acid, 83.07 g (0.5 mol) of terephthalic acid, 272.52 g (2.475 mol: excess of 0.225 molar, relative to the total amount of 2,6-naphthalene dicarboxylic acid and terephthalic acid) of hydroquinone, 1226.87 g (12 mol) of acetic anhydride, and 0.17 g of 1-methylimidazole as a catalyst were introduced. After the gas in the reactor was replaced with a nitrogen gas, in a nitrogen gas stream, the mixture was heated by raising the temperature from room temperature to 145°C over 15 minutes under stirring, followed by reflux at 145°C for 1 hour. Subsequently, the temperature was raised from 145°C to 310°C over 3 hours and 30 minutes while distilling off by-product acetic acid and unreacted acetic anhydride, and maintained at 310°C for 3 hours, then the content of the reactor was taken out, and cooled to room temperature. The obtained solid was pulverized to a particle size of about 0.1 to 1 mm by a pulverizer, then, in a nitrogen atmosphere, the pulverized material was heated by raising the temperature from room temperature to 250°C over 1 hour, then further raising it from 250°C to 310°C over 10 hours, and maintained at 310°C for 5 hours to carry out solid phase polymerization of the material. After solid phase polymerization, the resultant was cooled to afford powdery liquid crystal polyester.

This liquid crystal polyester was found to have 55 mol% of a repeating unit (1) in which Ar¹ is a 2, 6-naphthylene group, 17.5 mol% of a repeating unit (2) in which Ar² is a 2, 6-naphthylene group, 5 mol% of a repeating unit (2) in which Ar² is a 1,4-phenylene group, and 22.5% of a repeating unit (3) in which Ar³ is a 1, 4-phenylene group, and X and Y are each oxygen atom, and have an incipient fluidization temperature of 333°C.

### [Fluorine Resin]

As the fluorine resin, polytetrafluoroethylene ("Dyneon TF9205" of Sumitomo 3M) was used.

### [Carbon Fiber]

As the carbon fiber, a chopped carbon fiber with a number-average fiber diameter of 7 µm and a number-average fiber length of 6 mm ("TR06UB4E" of MITSUBISHI RAYON CO., LTD.) was used.

### [Granular Filler]

As the granular filler, following fillers were used.
Granular filler (1): Spherical alumina with a volume average particle diameter of 0.3 µm ("Sumicorundum AA-03" of Sumitomo Chemical Co., Ltd.
Granular filler (2): Spherical alumina with a volume average particle diameter of 2 µm ("Sumicorundum AA-2" of Sumitomo Chemical Co., Ltd.
Granular filler (3): Spherical alumina with a volume average particle diameter of 18 µm ("Sumicorundum AA-18" of Sumitomo Chemical Co., Ltd.

### [Plate-like Filler]

As the plate-like filler, following fillers were used. Plate-like filler (1): Mica with a volume average particle diameter of 24 µm ("AB25S" of YAMAGUCHI MICA CO., LTD.) Plate-like filler (2): Graphite with a volume average particle diameter of 5 µm ("J-CPB" of Nippon Graphite Industories, ltd.) Plate-like filler (3): Graphite with a volume average particle diameter of 19 µm ("CPB" of Nippon Graphite Industories, ltd.) Plate-like filler (4): Graphite with a volume average particle diameter of 40 µm ("CB-150" of Nippon Graphite Industories, ltd.)

### Examples 1 to 10, Comparative Example 1

A liquid crystal polyester, a fluorine resin, a carbon fiber, a granular filler and a plate-like filler were melt-kneaded at 320°C in a ratio shown in Table 1, and pelletized, using a co-rotating twin-screw extruder ("PCM-30HS" of Ikegai Corp) . The obtained pellet was injection molded at a cylinder nozzle temperature of 320°C, a mold temperature of 130°C, and an injection speed of 530 cm³/s, to obtain a molded body having a length of 126 mm, a width of 12.5 mm, and a thickness of 3.2 mm.

In the position of 50 mm from the gate of the long axis end face of the obtained molded body, a plate-like test piece having a width of 4 mm in the major axis and vertical direction was cut out. For this test piece, with the minimum area section (4 mm × 3.2 mm) as a sliding surface, using a pin-on-disk type sliding test machine (Institut furVerbundwerkstoffe GmbH), with a high carbon chromium bearing steel (DIN [German Industrial Standard] 100Cr6 (surface roughness Ra of 0.2 µm)) as a mating member, the friction and wear test was performed at 20°C, an applied pressure of 4 MPa, a rate of 1 m/s, for 20 hours, to obtain the friction coefficient and specific wear rate of the test piece and wear degree of the mating material.

As the friction coefficient of the test piece, the average value of the friction coefficient between 15 hours and 20 hours after the start of friction and wear test was obtained.

As the specific wear rate of the test piece, a value dividing the wear volume that is the product of the height difference and the area of the sliding surface of the test piece between 15 hours and 20 hours after the start of friction and wear test, by applied load and sliding distance was obtained.

As the wear degree of the mating member, the height difference between the sliding surface and the non-sliding surface of the mating material surface was measured, using White Light Profilometer (manufactured by FRT Microprof/Fries GmbH). The result is shown in Table 1.

**Table 1**

| Examples | | Example | | | | | | | | | | Comparative Example |
|---|---|---|---|---|---|---|---|---|---|---|---|---|
| | | 1 | 2 | 3 | 4 | 5 | 6 | 7 | 8 | 9 | 10 | 1 |
| Liquid crystal polyester | (Part by mass) | 100 | 100 | 100 | 100 | 100 | 100 | 100 | 100 | 100 | 100 | 100 |
| Fluorine resin | (Part by mass) | 15 | 15 | 7 | 15 | 15 | 15 | 16 | 16 | 16 | 16 | 14 |
| Carbon fiber | (Part by mass) | 22 | 19 | 28 | 18 | 22 | 22 | 22 | 22 | 22 | 22 | 29 |
| Granular filler (1) | (Part by mass) | 12 | 15 | 12 | 18 | - | - | 13 | 13 | 13 | 13 | - |
| Granular filler (2) | (Part by mass) | - | - | - | - | 12 | - | - | - | - | - | - |
| Granular filler (3) | (Part by mass) | - | - | - | - | - | 12 | - | - | - | - | - |
| Plate-like filler (1) | (Part by mass) | - | - | - | - | - | - | 6 | - | - | - | - |
| Plate-like filler (2) | (Part by mass) | - | - | - | - | - | - | - | 6 | - | - | - |
| Plate-like filler (3) | (Part by mass) | - | - | - | - | - | - | - | - | 6 | - | - |
| Plate-like filler (4) | (Part by mass) | - | - | - | - | - | - | - | - | - | 6 | - |
| Friction coefficient of test piece | (-) | 0.26 | 0.26 | 0.25 | 0.30 | 0.41 | 0.42 | 0.21 | 0.24 | 0.24 | 0.24 | 0.69 |
| Specific wear rate of test piece | (× 10⁻⁷mm³ /Nm) | 4.8 | 7.6 | 5.9 | 27.2 | 77.9 | 124.2 | 5.4 | 4.4 | 4.2 | 4.6 | 15.0 |
| Wear degree of mating material | (µm) | 0 | 0 | 0 | 0 | 7 | 18 | 0 | 0 | 0 | 0 | 0 |

### INDUSTRIAL APPLICABILITY

The liquid crystal polyester composition of the present invention is excellent in slipperiness, thus is useful as a material of a sliding member.

## Claims

1. A liquid crystal polyester composition containing a liquid crystal polyester, a fluorine resin, a carbon fiber, and a granular filler, wherein the granular filler is at least one granular filler selected from the group consisting of aluminum oxide, silicon oxide and titanium oxide.

2. The liquid crystal polyester composition according to claim 1, wherein the liquid crystal polyester is a liquid crystal polyester having a repeating unit represented by formula (1), a repeating unit represented by formula (2), and a repeating unit represented by formula (3):
(1) -O-Ar¹-CO-
(2) -CO-Ar²-CO-
(3) -X-Ar³-Y-
wherein Ar¹ represents a phenylene group, a naphthylene group, or a biphenylylene group; Ar² and Ar³ each independently represent a phenylene group, a naphthylene group, a biphenylylene group, or a group represented by formula (4); X and Y each independently represent an oxygen atom or an imino group; and each hydrogen atom present in the group represented by Ar¹, Ar² or Ar³ may be independently substituted with a halogen atom, an alkyl group or an aryl group;
(4) -Ar⁴-Z-Ar⁵-
wherein Ar⁴ and Ar⁵ each independently represent a phenylene group or a naphthylene group; and Z represents an oxygen atom, a sulfur atom, a carbonyl group, a sulfonyl group or an alkylidene group.

3. The liquid crystal polyester composition according to claim 2, wherein the liquid crystal polyester is a liquid crystal polyester having 30 to 80 mol% of the repeating unit represented by formula (1), 10 to 35 mol% of the repeating unit represented by formula (2), and 10 to 35 mol% of the repeating unit represented by formula (3), relative to the total amount of all repeating units of the liquid crystal polyester.

4. The liquid crystal polyester composition according to any one of claims 1 to 3, wherein the volume average particle diameter of the granular filler is 1 µm or less, wherein the volume average particle diameter of the granular filler is measured by a laser diffraction method.

5. The liquid crystal polyester composition according to any one of claims 1 to 3, wherein the content of the fluorine resin is 5 to 20 parts by mass, relative to 100 parts by mass of the liquid crystal polyester.

6. The liquid crystal polyester composition according to any one of claims 1 to 3, wherein the content of the carbon fiber is 15 to 30 parts by mass, relative to 100 parts by mass of the liquid crystal polyester.

7. The liquid crystal polyester composition according to any one of claims 1 to 3, wherein the content of the granular filler is 5 to 20 parts by mass, relative to 100 parts by mass of the liquid crystal polyester.

8. The liquid crystal polyester composition according to any one of claims 1 to 3, further containing a plate-like filler.

9. The liquid crystal polyester composition according to claim 8, wherein the plate-like filler is at least one of plate-like fillers selected from the group consisting of mica and graphite.

10. The liquid crystal polyester composition according to claim 8, wherein the content of the plate-like filler is 5 to 10 parts by mass, relative to 100 parts by mass of the liquid crystal polyester.

11. A sliding member obtained by molding the liquid crystal polyester composition as defined in any one of claims 1 to 3.

## Patentansprüche

1. Eine Flüssigkristallpolyesterzusammensetzung, enthaltend einen Flüssigkristallpolyester, ein Fluorharz, eine Kohlenstofffaser und einen granulären Füllstoff, wobei der granuläre Füllstoff mindestens ein granulärer Füllstoff, ausgewählt aus der Gruppe bestehend aus Aluminiumoxid, Siliciumoxid und Titanoxid, ist.

2. Die Flüssigkristallpolyesterzusammensetzung nach Anspruch 1, wobei der Flüssigkristallpolyester ein Flüssigkristallpolyester ist, der eine wiederkehrende Einheit, dargestellt durch Formel (1), eine wiederkehrende Einheit, dargestellt durch Formel (2), und eine wiederkehrende Einheit, dargestellt durch Formel (3), aufweist:
(1) -O-Ar¹-CO-
(2) -CO-Ar²-CO-
(3) -X-Ar³-Y-
wobei Ar¹ einen Phenylenrest, einen Naphthylenrest oder einen Biphenylylenrest bedeutet; Ar² und Ar³ jeweils unabhängig einen Phenylenrest, einen Naphthylenrest, einen Biphenylylenrest oder einen Rest, dargestellt durch Formel (4), bedeuten; X und Y jeweils unabhängig ein Sauerstoffatom oder einen Iminorest bedeuten; und jedes in dem durch Ar¹, Ar² oder Ar³ dargestellten Rest vorhandene Wasserstoffatom unabhängig mit einem Halogenatom, einem Alkylrest oder einem Arylrest substituiert sein kann;
(4) -Ar⁴-Z-Ar⁵-
wobei Ar⁴ und Ar⁵ jeweils unabhängig einen Phenylenrest oder einen Naphthylenrest bedeuten; und Z ein Sauerstoffatom, ein Schwefelatom, einen Carbonylrest, einen Sulfonylrest oder einen Alkylidenrest bedeutet.

3. Die Flüssigkristallpolyesterzusammensetzung nach Anspruch 2, wobei der Flüssigkristallpolyester ein Flüssigkristallpolyester ist, der 30 bis 80 Mol-% der wiederkehrenden Einheit, dargestellt durch Formel (1), 10 bis 35 Mol-% der wiederkehrenden Einheit, dargestellt durch Formel (2), und 10 bis 35 Mol-% der wiederkehrenden Einheit, dargestellt durch Formel (3), bezogen auf die Gesamtmenge aller wiederkehrenden Einheiten des Flüssigkristallpolyesters, aufweist.

4. Die Flüssigkristallpolyesterzusammensetzung nach einem der Ansprüche 1 bis 3, wobei der volumengemittelte Teilchendurchmesser des granulären Füllstoffs 1 µm oder weniger beträgt, wobei der volumengemittelte Teilchendurchmesser des granulären Füllstoffs mit Hilfe eines Laserbeugungsverfahrens gemessen wird.

5. Die Flüssigkristallpolyesterzusammensetzung nach einem der Ansprüche 1 bis 3, wobei der Gehalt des Fluorharzes 5 bis 20 Massenteile, bezogen auf 100 Massenteile des Flüssigkristallpolyesters, beträgt.

6. Die Flüssigkristallpolyesterzusammensetzung nach einem der Ansprüche 1 bis 3, wobei der Gehalt der Kohlenstofffaser 15 bis 30 Massenteile, bezogen auf 100 Massenteile des Flüssigkristallpolyesters, beträgt.

7. Die Flüssigkristallpolyesterzusammensetzung nach einem der Ansprüche 1 bis 3, wobei der Gehalt des granulären Füllstoffs 5 bis 20 Massenteile, bezogen auf 100 Massenteile des Flüssigkristallpolyesters, beträgt.

8. Die Flüssigkristallpolyesterzusammensetzung nach einem der Ansprüche 1 bis 3, weiter enthaltend einen plättchenartigen Füllstoff.

9. Die Flüssigkristallpolyesterzusammensetzung nach Anspruch 8, wobei der plättchenartige Füllstoff mindestens einer aus plättchenartigen Füllstoffen, ausgewählt aus der Gruppe bestehend aus Glimmer und Graphit, ist.

10. Die Flüssigkristallpolyesterzusammensetzung nach Anspruch 8, wobei der Gehalt des plättchenartigen Füllstoffs 5 bis 10 Massenteile, bezogen auf 100 Massenteile des Flüssigkristallpolyesters, beträgt.

11. Gleitteil, erhalten durch Formen der Flüssigkristallpolyesterzusammensetzung wie in einem der Ansprüche 1 bis 3 definiert.

## Revendications

1. Composition de polyester à cristaux liquides contenant un polyester à cristaux liquides, une résine fluor, une fibre de carbone, et une charge granulaire, dans laquelle la charge granulaire est au moins une charge granulaire choisie dans le groupe constitué par l'oxyde d'aluminium, l'oxyde de silicium et l'oxyde de titane.

2. Composition de polyester à cristaux liquides selon la revendication 1, dans laquelle le polyester à cristaux liquides est un polyester à cristaux liquides ayant un motif de répétition représenté par la formule (1), un motif de répétition représenté par la formule (2), et un motif de répétition représenté par la formule (3) :
(1) -O-Ar¹-CO-
(2) -CO-Ar²-CO-
(3) -X-Ar³-Y-
où Ar¹ représente un groupe phénylène, un groupe naphtylène, ou un groupe biphénylylène ; Ar² et Ar³ chacun indépendamment représentent un groupe phénylène, un groupe naphtylène, un groupe biphénylylène, ou un groupe représenté par la formule (4) ; X et Y chacun indépendamment représentent un atome d'oxygène ou un groupe imino ; et chaque atome d'hydrogène présent dans le groupe représenté par Ar¹, Ar² ou Ar³ peut indépendamment être substitué par un atome d'halogène, un groupe alkyle ou un groupe aryle ;
(4) -Ar⁴-Z-Ar⁵-
où Ar⁴ et Ar⁵ chacun indépendamment représentent un groupe phénylène ou un groupe naphtylène ; et Z représente un atome d'oxygène, un atome de soufre, un groupe carbonyle, un groupe sulfonyle ou un groupe alkylidène.

3. Composition de polyester à cristaux liquides selon la revendication 2, dans laquelle le polyester à cristaux liquides est un polyester à cristaux liquides ayant de 30 à 80 % en mol de motif de répétition représenté par la formule (1), de 10 à 35 % en mol de motif de répétition représenté par la formule (2), et de 10 à 35 % en mol de motif de répétition représenté par la formule (3), par rapport à la quantité totale de tous les motifs de répétition du polyester à cristaux liquides.

4. Composition de polyester à cristaux liquides selon l'une quelconque des revendications 1 à 3, dans laquelle le diamètre de particule moyen en volume de la charge granulaire est de 1 µm ou moins, où le diamètre de particule moyen en volume de la charge granulaire est mesuré par une méthode de diffraction par laser.

5. Composition de polyester à cristaux liquides selon l'une quelconque des revendications 1 à 3, dans laquelle la teneur en résine fluor est de 5 à 20 parties en poids, pour 100 parties en poids du polyester à cristaux liquides.

6. Composition de polyester à cristaux liquides selon l'une quelconque des revendications 1 à 3, dans laquelle la teneur en fibre de carbone est de 15 à 30 parties en poids, pour 100 parties en poids du polyester à cristaux liquides.

7. Composition de polyester à cristaux liquides selon l'une quelconque des revendications 1 à 3, dans laquelle la teneur en charge granulaire est de 5 à 20 parties en poids, pour 100 parties en poids du polyester à cristaux liquides.

8. Composition de polyester à cristaux liquides selon l'une quelconque des revendications 1 à 3, contenant en outre une charge de type à feuillets.

9. Composition de polyester à cristaux liquides selon la revendication 8, dans laquelle la charge de type à feuillets est au moins une des charges de type à feuillets choisies dans le groupe constitué par le mica et le graphite.

10. Composition de polyester à cristaux liquides selon la revendication 8, dans laquelle la teneur en charge de type à feuillets est de 5 à 10 parties en poids, pour 100 parties en poids du polyester à cristaux liquides.

11. Élément coulissant obtenu par moulage de la composition de polyester à cristaux liquides selon l'une quelconque des revendications 1 à 3.
